# EUROPÄISCHE PATENTSCHRIFT

(11) **EP 2 221 694 B1**
(45) Veröffentlichungstag und Bekanntmachung des Hinweises auf die Patenterteilung: **27.03.2013**
(21) Anmeldenummer: 09002345.8
(22) Anmeldetag: 19.02.2009
(51) Int. Cl.: H04L 29/08, G05B 19/418, H04L 29/06, H04L 29/10

(54) **Verfahren zur Einräumung einer Berechtigung zur Nutzung einer Funktion in einem mehrere vernetzte Steuerungseinheiten umfassenden industriellen Automatisierungssystem und industrielles Automatisierungssystem**
Method for assigning a usage right for a function in an industrial automation system comprising several networked control units and industrial automation system
Procédé de concession d'une justification d'utilisation d'une fonction dans un système d'automatisation industriel comprenant plusieurs unités de commande en réseau et système d'automatisation industriel

(43) Veröffentlichungstag der Anmeldung: 25.08.2010
(73) Patentinhaber: Siemens Aktiengesellschaft, 80333 München (DE)
(72) Erfinder: Dingfelder, Sabine, 91088 Bubenreuth (DE); Schneider, Dieter, 76744 Wörth (DE)

(56) Entgegenhaltungen:
- DE-A1- 19 850 469
- US-A1- 2001 052 041
- US-A1- 2004 068 749
- US-A1- 2008 086 472

## Beschreibung

Aufgrund einer ständig steigenden Bedeutung von Informationstechnik für Automatisierungssysteme gewinnen Verfahren zur Sicherung von vernetzten Systemkomponenten wie Überwachungs-, Steuerungs- und Regelungseinrichtungen, Sensoren und Aktoren gegenüber unberechtigtem Zugriff verstärkt an Bedeutung. Im Vergleich zu anderen Anwendungsgebieten der Informationstechnik kommt Datenintegrität in der Aütomatisierungstechnik eine besonders hohe Bedeutung zu. Insbesondere bei einer Erfassung, Auswertung und Übermittlung von Meß- und Steuerungsdaten ist sicherzustellen, daß vollständige und unveränderte Daten vorliegen. Absichtliche, unabsichtliche oder durch einen technischen Fehler bedingte Veränderungen sind zu vermeiden. Besondere Anforderungen in der Automatisierungstechnik für sicherheitstechnische Verfahren resultieren außerdem aus einem Meldungsverkehr mit verhältnismäßig vielen, aber relativ kurzen Nachrichten. Daneben ist einer Echtzeitfähigkeit eines Automatisierungssystems und seiner Systemkomponenten Rechnung zu tragen.

Aus US 2004/068749 A1 ist eine integrierte Steuerung bekannt, die einen oder mehrere Controller umfaßt, die jeweils Steuerungsfunktionen wahrnehmen und steuerungerelevante Daten erfassen. Die steuerungsrelevanten Daten werden mit zugeordneten Steuerungsanweisungen verknüpft, um die steuerungsrelevanten Daten an einem Remote-Computer in einem vorgegebenen Format darzustellen. Die integrierte Steuerung umfaßt zusätzlich ein Kommunikationsmodul für einen Datenaustausch mit dem Remote-Computer über das Internet.

In US 2008/086472 A1 ist eine Anbindung eines Client an einen Datenbank-Server über einen Datenbank-Treiber beschrieben, der eine generische Schnittstelle bereitstellt. Diese generische Schnittstelle ist interoperabel mit Client-spezifischen bzw. proprietären Anwendungsprogrammierschnittstellen zur Client-seitigen Implementierung von Sicherheitsfunktionen und adaptiert diese auf unterschiedliche Server-seitige API. Dies ist von einem Client-seitig verwendeten Sicherheitsmechanismus abhängig.

Insbesondere in Automatisierungssystemen, die auf dienstorientierten Architekturen basieren, sind häufig sehr differenzierte Sicherheits- und Zugriffsrichtlinien für dort bereitgestellte Dienste anzuwenden. Dabei sind Sicherheits- und Zugriffslinien nicht nur in bezug auf Benutzer anzuwenden, sondern auch auf Dienste, die auf andere Dienste zurückgreifen. Dienste oder Funktionen, auf die nicht durch sämtliche Benutzer oder Dienste in einem Automatisierungssystem zugegriffen werden sollen, erfordern Zugriffskontrollverfahren. Für Zugriffskontrollverfahren definierte Sicherheits- und Zugriffsrichtlinien können selbst bei Diensten oder Funktionen, die logisch eng gekoppelt sind, individuell sehr unterschiedlich ausgestaltet sein. Dies verursacht bei bisherigen Lösungen mitunter einen hohen administrativen Aufwand zur Pflege von sicherheits- bzw. zugriffsrelevanten Einstellungen.

Der vorliegenden Erfindung liegt daher die Aufgabe zugrunde, ein effizientes Verfahren zur Bereitstellung einer Funktion in einem industriellen Automatisierungssystem zu schaffen, sowie eine geeignete technische Realisierung des Verfahrens anzugeben.

Diese Aufgabe wird erfindungsgemäß durch ein Verfahren mit den in Anspruch 1 angegebenen Merkmalen und durch ein Automatisierungssystem mit den in Anspruch 8 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden Funktionen eines Automatisierungssystems durch Dienste von vernetzten Steuerungseinheiten des Automatisierungsaystems bereitgestellt. Die Steuerungseinheiten sind vorzugsweise programmierbar. Ferner kann das Automatisierungssystem beispielsweise ein Fertigungs-, Prozeß- oder Gebäudeautomatisierungssystem sein. Dienstschnittstellen werden erfindungsgemäß innerhalb einer Client-Service-Architektur Service-seitig in Schnittstellen separiert, die entweder sicherheitskritische Funktionen oder sicherheitsunkritische Funktionen verfügbar machen. Die separierten Service-seitigen Schnittstellen werden gegenüber Client-Anwendungen durch eine Client-seitige Schnittstelle verborgen, bei welcher die Service-seitigen Schnittstellen registriert sind. Durch Dienste bereitgestellte Funktionen sind von Client-Anwendungen ausschließlich über die Client-seitige Schnittstelle aufrufbar. Das erfindungsgemäße Verfahren bietet den Vorteil, daß Client-seitig keine aufwendige Definition von Sicherheits- und Zugriffsrichtlinien erforderlich ist, um sicherheitskritische Dienste oder Funktionen vor unberechtigtem Zugriff zu schützen.

Entsprechend einer bevorzugten Ausgestaltung der vorliegenden Erfindung wird durch die Client-seitige Schnittstelle eine vollständige Anwendungsschnittstelle bereitgestellt. Auf diese Weise kann die Separierung der Service-seitigen Schnittstellen nach sicherheitskritischen Funktionen einerseits und sicherheitskritischen Funktionen andererseits besonders einfach und wirksam gegenüber Client-Anwendungen verborgen werden. Darüber hinaus ist auch eine feinere Differenzierung zu separierender Service-seitiger Schnittstellen möglich. Beispielsweise können Dienstschnittstellen Service-seitig in Schnittstellen separiert werden, die sicherheitskritische Schreib-Funktionen, sicherheitskritische Lese-Funktionen, sicherheitsunkritische Schreib-Funktionen oder sicherheitsunkritische Lese-Funktionen verfügbar machen.

Vorzugsweise wird Service-seitig eine separate Schnittstelle, die sicherheitskritische Funktionen verfügbar macht, nur dann bereitgestellt, wenn Client-seitig zumindest eine Dienstkomponente einen Zugriff auf sicherheitskritische Funktionen benötigt. Dies ermöglicht eine weitere Reduktion des Aufwands zur Implementierung von Zugriffskontrollmechanismen.

Dienste des Automatisierungssystems werden bevorzugt innerhalb einer dienstorientierten Architektur durch die Steuerungseinheiten bereitgestellt. Dienstorientierte bzw, serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Hieraus resultiert eine besonders sichere und flexible Bereitstellung einer Steuerungsinformation für ein rechnerbasiertes Objekt in einem Automatisierungssystem.

Das erfindungsgemäße Automatisierungssystem umfaßt mehrere über ein Kommunikationsnetz miteinander verbundener Steuerungseinheiten zur Bereitstellung von Funktionen des Automatisierungssystems als Dienste. Außerdem umfaßt das Automatisierungssystem eine Rechnereinheit zur Bereitstellung einer Client-Anwendung. Des weiteren ist eine Steuerungseinheit zur Bereitstellung eines durch die Client-Anwendung genutzten Dienstes vorgesehen, dessen Dienstschnittstellen innerhalb einer Client-Service-Architektur Service-seitig in Schnittstellen separiert sind, die entweder sicherheitskritische Funktionen oder sicherheitsunkritische Funktionen verfügbar machen. Die separierten Service-seitigen Schnittstellen sind gegenüber Client-Anwendungen durch eine Client-seitige Schnittstelle verborgen, bei welcher die Service-seitigen Schnittstellen registriert sind. Durch Dienste bereitgestellte Funktionen sind ausschließlich über die Client-seitige Schnittstelle aufrufbar.

Die Erfindung wird nachfolgend an einem Ausführungsbeispiel anhand der Zeichnung näher erläutert. Es zeigt
- Figur 1: eine schematische Darstellung eines Automatisierungssystems mit mehreren über ein Kommunikationsnetz miteinander verbundenen Steuerungseinheiten,
- Figur 2: eine Detaildarstellung von Client-seitigen und Service-seitigen Schnittstellen innerhalb des in Figur 1 dargestellten Automatisierungssystems.

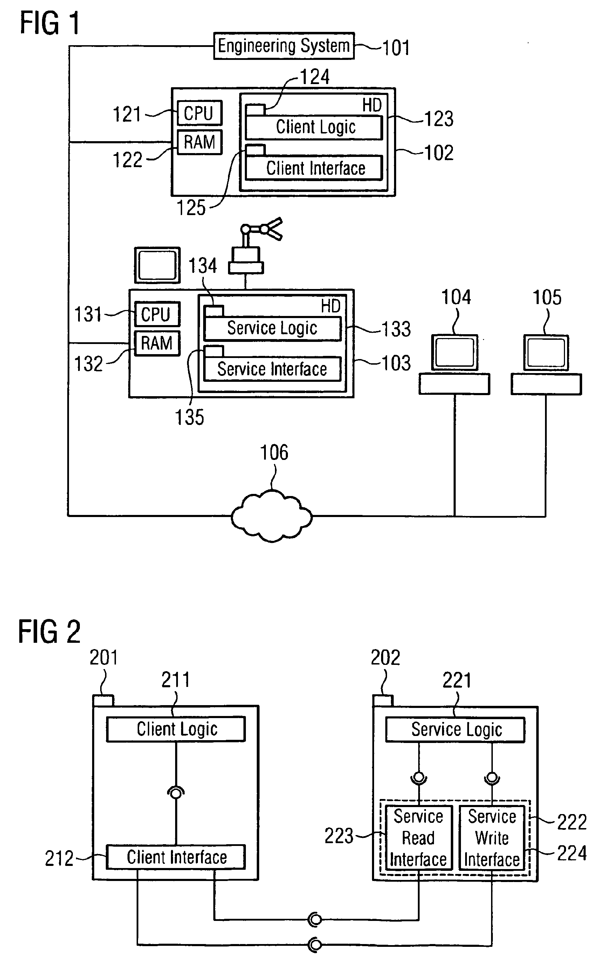

Das in Figur 1 dargestellte industrielle Automatisierungssystem umfaßt ein Engineering-System 101, eine Client-Rechnereinheit 102 und mehrere programmierbare Steuerungseinheiten 103-105, die als Netzknoten über ein Kommunikationsnetz 106 miteinander verbunden sind. Die Steuerungseinheiten 103-105 stellen Funktionen des Automatisierungssystems als lokale Dienste bereit, die mittels Konfigurationsdaten konfiguriert und aktiviert werden.

Das Engineering-System 1 dient zur Konfiguration, Wartung, Inbetriebnahme und Dokumentation des Automatisierungssystems und stellt Konfigurationsdaten bereit. Die Konfigurationsdaten umfassen Informationen zur Zuordnung von Diensten zu Steuerungseinheiten 103-105 und zu Abhängigkeiten zwischen Diensten.

Die Client-Rechnereinheit 102 und die Steuerungseinheiten 103-105 umfassen zumindest jeweils einen Prozessor 121, 131, einen Arbeitsspeicher 122, 132 und eine Festplatte 123, 133 zur nichtflüchtigen Speicherung von Programmcode, Anwendungsdaten und Benutzerdaten. Auf der Festplatte 123 der Client-Rechnereinheit 102 ist Programmcode 124 zur Bereitstellung einer Client-Anwendung und Programmcode 125 zur Implementierung einer Client-Anwendungsprogrammierschnittstelle gespeichert. Des weiteren ist auf der Festplatte 133 einer Steuerungseinheit 103 Programmcode 134 zur Bereitstellung eines lokalen Dienstes sowie Programmcode 135 zur Implementierung einer Service-seitigen Dienstschnittstelle für den lokalen Dienst gespeichert. Der lokale Dienst dient im vorliegenden Ausführungsbeispiel beispielsweise zur Ansteuerung meßtechnischer oder aktorischer Peripherie, wie Sensoren oder Roboter. Der auf den Festplatten 123, 133 gespeicherte Programmcode 124, 125, 134, 135 ist in den Arbeitsspeicher 122, 132 der Client-Rechnereinheit 102 und der Steuerungseinheit 103 ladbar und durch den jeweiligen Prozessor 121, 131 zur Bereitstellung obiger Funktionen ausführbar.

Entsprechend der Detaildarstellung von Client-seitigen und Service-seitigen Schnittstellen in Figur 2 ist eine Dienstschnittstelle 222 des durch die Steuerungseinheit 103 bereitgestellten Dienstes 202 in eine Schnittstelle für sicherheitskritische Funktionen 224 einerseits und in eine Schnittstelle für sicherheitsunkritische Funktionen 223 separiert. Dies dient einer Verringerung eines administrativen Aufwands zur Einräumung von Zugriffsrechten auf logisch gekoppelte Funktionen eines Dienstes. Die separierten Schnittstellen 223, 224 stellen im vorliegenden Ausführungsbeispiel die einzige Zugriffsmöglichkeit auf eine Dienstkomponente 221 dar, die den durch die Steuerungseinheit 103 bereitgestellten Dienst 202 logisch implementiert.

Eine Unterteilung nach sicherheitskritischen Funktionen und sicherheitsunkritische Funktionen kann beispielweise anhand einer Bewertung erfolgen, ob jeweils hohe Schutzanforderungen, etwa bei Schreibzugriffen, geringe Schutzanforderungen, etwa bei reinen Lesezugriffen, zu erfüllen sind. Über eine Unterteilung nach sicherheitskritischen Funktionen und sicherheitsunkritischen Funktionen hinaus ist auch eine feinere Differenzierung nach weiteren Schutzklassifizierungen möglich und von einer bestimmungsgemäßen Anwendung der vorliegenden Erfindung umfaßt.

Die Separierung der Service-seitigen Schnittstellen 223, 224 wird auf Seiten der durch die Rechnereinheit 102 bereitgestellten Client-Anwendung 201 durch eine Schnittstelle 212, bei welcher die Service-seitigen Schnittstellen 223, 224 registriert sind, gegenüber einer die Client-Anwendung 201 logisch implementierenden Dienstkomponente 211 verborgen. Durch den Dienst 202 bereitgestellte Funktionen sind von der Client-Anwendung 201 im vorliegenden Ausführungsbeispiel ausschließlich über die Client-seitige Schnittstelle 212 aufrufbar. Hierzu stellt die Client-seitige Schnittstelle 212 eine vollständige Anwendungsprogrammierschnittstelle für die Dienstkomponente 211 bereit, welche die Client-Anwendung 201 logisch implementiert. Auf diese Weise kann die Client-Anwendung 201 sämtliche durch den Dienst 202 bereitgestellte Funktionen über eine einheitliche Schnittstelle nutzen.

Sollen sicherheitskritische Funktionen eines Diensts nicht verfügbar gemacht werden, wird die entsprechende Serviceseitige Schnittstelle erst gar nicht bereitgestellt. Somit müssen durch den Dienst bereitgestellte sicherheitskritische Funktionen Service-seitig nicht gesondert geschützt werden.

Die Anwendung der vorliegenden Erfindung ist nicht auf das beschriebene Ausführungsbeispiel beschränkt.

## Patentansprüche

1. Verfahren zur Bereitstellung einer Funktion in einem mehrere vernetzte Steuerungseinheiten umfassenden industriellen Automatisierungssystem, bei dem
- Funktionen des Automatisierungssystems durch Dienste von den Steuerungseinheiten (103-105) bereitgestellt werden,
- Dienstschnittstellen (222) innerhalb einer Client-Service-Architektur Service-seitig in Schnittstellen (223, 224) separiert werden, die entweder sicherheitskritische Funktionen oder sicherheitsunkritische Funktionen verfügbar machen, **dadurch gekennzeichnet, dass**
- die separierten Service-seitigen Schnittstellen (223, 224) gegenüber Client-Anwendungen (201) durch eine Client-seitige Schnittstelle (212) verborgen werden, bei welcher die Service-seitigen Schnittstellen (223, 224) registriert sind,
- durch Dienste bereitgestellte Funktionen von Client-Anwendungen (201) ausschließlich über die Client-seitige (212) Schnittstelle aufrufbar sind.

2. Verfahren nach Anspruch 1,
bei dem durch die Client-seitige Schnittstelle eine vollständige Anwendungsschnittstelle bereitgestellt wird.

3. Verfahren nach einem der Ansprüche 1 oder 2,
bei dem Dienstschnittstellen innerhalb einer Client-Service-Architektur Service-seitig in Schnittstellen separiert werden, die sicherheitskritische Schreib-Funktionen, sicherheitskritische Lese-Funktionen, sicherheitsunkritische Schreib-Funktionen oder sicherheitsunkritische Lese-Funktionen verfügbar machen.

4. Verfahren nach einem der Ansprüche 1 bis 3,
bei dem Service-seitig eine separate Schnittstelle, die sicherheitskritische Funktionen verfügbar macht, nur dann bereitgestellt wird, wenn Client-seitig zumindest eine Dienstkomponente einen Zugriff auf sicherheitskritische Funktionen benötigt.

5. Verfahren nach einem der Ansprüche 1 bis 4,
bei dem Dienste des Automatisierungssystems innerhalb einer dienstorientierten Architektur durch die Steuerungseinheiten bereitgestellt werden.

6. Verfahren nach einem der Ansprüche 1 bis 5,
bei dem das Automatisierungssystem ein Fertigungs-, Prozeß- oder Gebäudeautomatisierungssystem ist.

7. Verfahren nach einem der Ansprüche 1 bis 6,
bei dem die Steuerungseinheiten programmierbar sind.

8. Industrielles Automatisierungssyetem mit
- mehreren über ein Kommunikationsnetz (106) miteinander verbundenen Steuerungseinheiten (103-105) zur Bereitstellung von Funktionen des Automatisierungssystems als Dienste,
- einer Rechnereinheit (102) zur Bereitstellung einer Client-Anwendung (201),
- einer Steuerungseinheit (103) zur Bereitstellung eines durch die Client-Anwendung (201) genutzten Dienstes (202), dessen Dienstschnittstellen (222) innerhalb einer Client-Service-Architektur Service-seitig in Schnittstellen (223, 224) separiert sind, die entweder sicherheitskritische Funktionen oder sicherheitsunkritische Funktionen verfügbar machen, **dadurch gekennzeichnet, dass**
- die separierten Service-seitigen Schnittstellen (223, 224) gegenüber Client-Anwendungen (201) durch eine Client-seitige Schnittstelle (212) verborgen sind, bei welcher die Service-seitigen Schnittstellen (223, 224) registriert sind,
- durch Dienste bereitgestellte Funktionen von Client-Anwendungen (201) ausschließlich über die Client-seitige Schnittstelle (212) aufrufbar sind.

## Claims

1. Method for providing a function in an industrial automation system comprising a plurality of networked control units, in which
- functions of the automation system are provided by services of the control units (103-105),
- service interfaces (222) are separated inside a client/service architecture, on the service side, into interfaces (223, 224) which provide either security-critical functions or functions which are not critical to security, **characterized in that**
- the separated service-side interfaces (223, 224) are hidden from client applications (201) by a client-side interface (212) in which the service-side interfaces (223, 224)are recorded,
- functions of client applications (201) provided by services can be called solely via the client-side interface (212).

2. Method according to Claim 1,
in which a complete application interface is provided by the client-side interface.

3. Method according to either of Claims 1 and 2,
in which service interfaces are separated inside a client/service architecture, on the service side, into interfaces which provide security-critical write functions, security-critical read functions, write functions which are not critical to security or read functions which are not critical to security.

4. Method according to one of Claims 1 to 3,
in which a separate interface which provides security-critical functions is provided on the service side only when at least one service component requires access to security-critical functions on the client side.

5. Method according to one of Claims 1 to 4,
in which services of the automation system are provided inside a service-oriented architecture by the control units.

6. Method according to one of Claims 1 to 5,
in which the automation system is a production, process or building automation system.

7. The method according to one of Claims 1 to 6,
in which the control units can be programmed.

8. Industrial automation system having
- a plurality of control units (103-105) which are connected to one another via a communication network (106) and are intended to provide functions of the automation system in the form of services,
- a computer unit (102) for providing a client application (201),
- a control unit (103) for providing a service (202) which is used by the client application (201) and the service interfaces (222) of which are separated inside a client/service architecture, on the service side, into interfaces (223, 224) which provide either security-critical functions or functions which are not critical to security, **characterized in that**
- the separated service-side interfaces (223, 224) are hidden from client applications (201) by a client-side interface (212) in which the service-side interfaces (223 224) are recorded, and
- functions of client applications (201) provided by services can be called solely via the client-side interface (212).

## Revendications

1. Procédé de mise à disposition d'une fonction dans un système d'automatisation industrielle comprenant plusieurs unités de commande en réseau, dans lequel
- on met à disposition des fonctions du système d'automatisation par des services des unités ( 103 à 105 ) de commande,
- on sépare des interfaces ( 222 ) de service au sein d'une architecture service-client, du côté service en des interfaces ( 223, 224 ) qui rendent disponibles des fonctions déterminantes du point de vue de la sécurité ou des fonctions qui ne sont pas critiques du point de vue de la sécurité,
**caractérisé en ce que**
- on cache les interfaces ( 223, 224 ) séparées côté service vis-à-vis d'applications ( 201 ) client par une interface ( 212 ) côté client, pour laquelle les interfaces ( 223, 224 ) côté service sont enregistrées,
- on peut appeler des fonctions d'application ( 201 ) client mises à disposition par des services exclusivement par l'interface ( 212 ) côté client.

2. Procédé suivant la revendication 1,
dans lequel on met à disposition une interface application complète par l'interface côté client.

3. Procédé suivant l'une des revendications 1 ou 2,
dans lequel on sépare des interfaces de service dans une architecture service-client en interfaces côté service, qui rendent disponibles des fonctions d'écriture critiques du point de vue de la sécurité, des fonctions d'écriture qui ne sont pas critiques du point de vue de la sécurité ou des fonctions de lecture qui ne sont pas critiques du point de vue de la sécurité.

4. Procédé suivant l'une des revendications 1 à 3,
dans lequel on ne met à disposition du côté service une interface distincte, qui rend disponible des fonctions critiques du point de vue de la sécurité, que si du côté client au moins un composant de service a besoin d'un accès à des fonctions critiques du point de vue de la sécurité.

5. Procédé suivant l'une des revendications 1 à 4,
dans lequel on met par les unités de commande à disposition des services du système d'automatisation au sein d'une architecture à orientation service.

6. Procédé suivant l'une des revendications 1 à 5,
dans lequel le système d'automatisation est un système de fabrication, un système de processus ou un système d'automatisation de bâtiment.

7. Procédé suivant l'une des revendications 1 à 6,
dans lequel les unités de commande sont programmables.

8. Système d'automatisation industriel comprenant
- plusieurs unités ( 103 à 105 ) de commande reliées entre elles par un réseau ( 106 ) de communication et destinées à mettre à disposition des fonctions du système d'automatisation comme services,
- une unité ( 102 ) informatique de mise à disposition d'une application ( 201 ) client,
- une unité ( 103 ) de commande de mise à disposition d'un service ( 202 ) utilisé par l'application ( 201 ) client, dont les interfaces ( 222 ) de service sont séparées au sein d'une architecture de service-client du côté service en des interfaces ( 223, 224 ) qui rendent disponibles soit des fonctions critiques du point de vue de la sécurité, soit des fonctions qui ne sont pas critiques du point de vue de la sécurité,
**caractérisé en ce que**
- on cache les interfaces ( 223, 224 ) séparées côté service vis-à-vis d'applications ( 201 ) client par une interface ( 212 ) côté client, pour laquelle les interfaces ( 223, 224 ) côté service sont enregistrées,
- on peut appeler des fonctions d'application ( 201 ) client mises à disposition par des services exclusivement par l'interface ( 212 ) côté client.
